Europäisches Patentamt

European Patent Office

Office européen des brevets

(19)

(11) **EP 0 765 682 B1**

(12) **EUROPÄISCHE PATENTSCHRIFT**

(45) Veröffentlichungstag und Bekanntmachung des Hinweises auf die Patenterteilung:
**31.03.2004 Patentblatt 2004/14**

(51) Int Cl.[7]: **B01D 61/14**, B01D 63/04
// A61M1/34

(21) Anmeldenummer: **96115006.7**

(22) Anmeldetag: **19.09.1996**

(54) **Verfahren zum Trennen von flüssigen Medien mittels über einen Zwischenraum miteinander verbundener erster Seiten zweier Membranen**

Method for separating liquid media with two membranes having their primary sides connected by an intermediate space

Procédé de séparation de milieux liquides à l'aide de deux membranes, dont les côtés primaires sont raccordés par un espace intermédiaire

(84) Benannte Vertragsstaaten:
**AT BE CH DE FR GB IT LI NL SE**

(30) Priorität: **30.09.1995 DE 19536651**

(43) Veröffentlichungstag der Anmeldung:
**02.04.1997 Patentblatt 1997/14**

(73) Patentinhaber: **GKSS-Forschungszentrum Geesthacht GmbH**
**21502 Geesthacht (DE)**

(72) Erfinder:
• **Hilke, Roland**
**14513 Teltow (DE)**
• **Albrecht, Wolfgang, Dr.**
**14513 Teltow (DE)**
• **Weigel, Thomas, Dr.**
**14557 Wilhelmshorst (DE)**
• **Paul, Dieter, Prof. Dr.**
**14532 Kleinmachnow (DE)**

(74) Vertreter: **Niedmers, Ole, Dipl.-Phys. et al Patentanwalt,**
**Van-der-Smissen-Strasse 3**
**22767 Hamburg (DE)**

(56) Entgegenhaltungen:
**EP-A- 0 076 421          EP-A- 0 692 269**
**WO-A-95/04559          DE-C- 19 507 595**

• **JOURNAL OF MEMBRANE SCIENCE, Bd. 44, Nr. 1, 1.Juni 1989, Seiten 89-114, XP000068841 SHETTIGAR U R: "INNOVATIVE EXTRACORPOREAL MEMBRANE SYSTEMS"**
• **TORU SHINZATO: "Infusion-Free Hemodiafiltration", ARTIFICIAL ORGANS, , November 1982, Band 6, Nr. 4, Seiten 453 - 456**

## Beschreibung

Die Erfindung betrifft ein Verfahren zur Trennung flüssiger Medien, wobei das zu trennende Medium nacheinander an die jeweils erste Seite zweier Membranen über einen zwischen den Membranen vorgesehenen Zwischenraum geleitet wird, und wobei die zweiten Seiten der beiden Membranen einen gemeinsamen, mit flüssigem Trägermedium gefüllten Raum begrenzen, daß der gemeinsame Raum während des Trennvorganges verschließbar ist und daß die Strömungskanäle an den jeweils ersten Seiten der Membranen so bemessen werden, daß die mittlere Strömungsgeschwindigkeit $v_1$ des zu trennenden Mediums an der ersten Seite der ersten Membran < der Strömungsgeschwindigkeit $v_2$ des zu trennenden Mediums an der ersten Seite der zweiten Membran ist, wobei die Membranen so ausgewählt werden, daß die Inhaltsstoffe des zu trennenden Mediums sich im gemeinsamen äußeren Raum anreichern.

Ein Verfahren dieser Art ist bekannt (DE-C-195 07 595), und zwar für Membranen, die allgemein auch Flachmembranen sein können und für sogenannte Hohlfadenmembranen. Zwischen den beiden Membranen, die nacheinander an deren jeweils ersten Seiten vom zu trennenden Medium durchflossen werden, ist ein Zwischenraum vorgesehen, der beispielsweise auch bei der Ausbildung der Membranen in Form von Hohlfadenmembranen das Hineinströmen des zu trennenden Mediums aus dem Innenraum der Hohlfadenmembranen des ersten Filterelements in diesen Zwischenraum gestattet, wobei aus diesem Zwischenraum das zu trennende Medium wiederum in den Innenraum der Hohlfadenmembranen des zweiten Filterelements fließt.

Normalerweise ist dieser Zwischenraum so ausgestaltet, daß das Strömen des zu trennenden Mediums durch diesen Zwischenraum, d.h. aus dem Innenraum der Hohlfadenmembranen des ersten Filterelements heraus, ungestört in den jeweiligen Innenraum der Hohlfadenmembranen des zweiten Filterelements möglich ist. Eine freie Durchströmbarkeit dieses Zwischenraumes ist normalerweise gegeben, wenn beispielsweise bei Hohlfadenmembranen zur Bildung der ersten und zweiten Filterelemente die Lumenquerschnittsaustrittsflächen, d.h. die freien Stirnflächen der Hohlfadenmembranen, die offen sind, kleiner als die freie Querschnittsfläche des Zwischenraumes sind. Sinngemäß gilt diese Voraussetzung natürlich auch bei Flachmembranen entsprechend. Unter den angegebenen konstruktiven Voraussetzungen werden die Strömungsbedingungen in den Innenräumen der Hohlfadenmembranen oder allgemein an den jeweils ersten Seiten der beiden Membranen durch die Strömungsbedingungen in bzw. an den einzelnen Filterelementen bestimmt. Bei dem oben beschriebenen Verfahren der deutschen Patentschrift wird somit im ersten Filterelement flüssiges Medium von den ersten Seiten der Membranen bzw. vom Innenraum der Hohlfadenmembranen des ersten Filterelements über die Membranwand des ersten Filterelements in den gemeinsamen Filtratraum des Verfahrens und von dort mit veränderter Zusammensetzung über die Membranwand des zweiten Filterelements in den Innenraum bei Hohlfadenmembranen bzw. auf die erste Seite der dortigen Flachmembran geführt, was gemäß des oben beschriebenen Verfahrens ohne äußere Hilfsmittel zu einer Selbstregulierung des Flusses von der ersten Seite der ersten Membran bzw. aus dem Innenraum von Hohlfadenmembranen des ersten Filterelements und vom Raum zur ersten Seite der zweiten Membran bzw. in den Innenraum der Hohlfadenmembranen des zweiten Filterelements führt. Bei geeigneter Wahl der Membranen reichern sich demzufolge Inhaltsstoffe des zu trennenden bzw. zu fraktionierenden und/oder zu konzentrierenden flüssigen Mediums, das an den ersten Seiten zweier Membranen längsströmt bzw. durch die Innenräume der Hohlfadenmembranen des ersten und zweiten Filterelementes strömt, im gemeinsamen äußeren Raum an, wobei ein Konzentrat an abzutrennenden bzw. zu fraktionierenden und/oder zu konzentrierenden Inhaltsstoffen entsteht.

Die Effektivität eines derartigen Trennvorganges wird somit in starkem Maße vom Umfang der Zirkulation von der ersten zur zweiten Seite der ersten Membran bzw. von der zweiten Seite zur ersten Seite der zweiten Membran bzw. vom Innenraum der Hohlfadenmembranen des ersten Filterelements in den Raum und von diesem in den Innenraum der Hohlfadenmembranen des zweiten Filterelements hinein bestimmt.

Für bestimmte Trennvorgänge hat sich gezeigt, daß die Effektivität des Trennvorganges im allgemeinen nicht ausreichend groß ist bzw. daß dieser nicht schnell genug verläuft.

Aus dem "Journal of Membran sience, Bd. 44, Nr. 1, 1989, S. 89 - 114" ist ein Verfahren zur Trennung flüssiger Medien bekannt, wobei das zu trennende Medium, das Blut sein kann, nacheinander an die jeweils erste Seite zweier Membranen über einen zwischen den Membranen vorgesehenen Zwischenraum geleitet wird. Es handelt sich bei der Vorrichtung, mit der dieses bekannte Verfahren ausgeführt werden kann, um zwei in Serie geschaltete sogen. "high-flux-filter", wobei es sich dabei um artgleiche Filter handelt. Mittels eines Controllers wird die Ultrafiltrationsrate geregelt. Bei dem bekannten Verfahren handelt es sich um eine infusionsfreie Hämodialfiltration, bei der mit einer Ultrafiltrationsrate von "0" gearbeitet wird und bei der so geregelt wird, daß ein der Filtration entsprechendes Filtratvolumen rückpermeiert. Da es sich bei dem bekannten Verfahren um artgleiche Filter handelt, entspricht die Strömungsgeschwindigkeit an der ersten Seite des ersten Filters der Strömungsgeschwindigkeit an der ersten Seite des zweiten Filters. Im Normalfall der Dialyse, bei der mit Ultrafiltration gearbeitet wird, ist die Strömungsgeschwindigkeit an der ersten Seite des ersten Filters dann immer größer als an der ersten Seite des zweiten Filters. Ein permanenter Volumenstrom im ersten Filter bedingt zwangsweise einen Verlust an Strömungsgeschwindigkeit am zweiten Filter. Das Filtrations-Refiltrationsprinzip gem. des bekannten Verfahrens basiert somit allein auf der gezielten Unterbrechung der Strömung zwischen dem ersten Filter und dem zweiten Filter.

Aus dem Dokument "Artificial Organs, Bd. 6, Nr. 4, 1982 - S. 454 - 456" ist ein Verfahren zur Trennung flüssiger Medien bekannt, wobei das zu trennende Medium, das Blut sein kann, nacheinander an die jeweils erste Seite zweier Hohlfadenmembranen geleitet wird. Die zweiten Seiten der Membranen begrenzen einen gemeinsamen, mit flüssigem Trägermedium gefüllten Raum. Mittels eines Reglers bzw. Controllers wird die gesamte Bilanz des in dem Verfahren abgetrennten Wassers geregelt, nicht jedoch die Durchflußraten in der Filtrations- und in der Refiltrationsstufe. Prinzipiell ist es möglich, bei dem bekannten Verfahren eine Netto-Ultrafiltrationsrate von "0" einzustellen, wobei dann eine zufällig mittels einer "Klemme" eingestellte Strömungsverengung die Filtrations-Refiltrationsrate bestimmt. Bei dem bekannten Verfahren wird zwar von einer "Abtrennung" von bestimmten Substanzen aus dem Blut gesprochen, diese "Abtrennung" beruht aber tatsächlich auf einer Verdünnung und nicht auf einem Filtrationseffekt.

Es ist somit Aufgabe der vorliegenden Erfindung, ein Verfahren der eingangs genannten Art zu schaffen, mit dem die Effektivität des Trennvorganges des Mediums erhöht wird unter Beibehaltung der selbständigen Flußregulierung der einzelnen Medienströme, wobei aber dennoch ein einfacher und sicherer Ablauf des Verfahrens gewährleistet sein muß und das vorbeschriebene Prinzip der selbständigen Flußregulierung nicht verlassen wird.

Gelöst wird die Aufgabe gemäß der Erfindung dadurch, daß der Zwischenraum eine Strömungsverengung für das zu trennende Medium aufweist.

Vorteilhaft wird durch die erfindungsgemäße Maßnahme erreicht, daß die Strömung des zu trennenden bzw. zu fraktionierenden und/oder zu konzentrierenden flüssigen Mediums verändert wird, so daß das Strömen des zu trennenden Mediums eben durch den Zwischenraum nicht mehr ungehindert möglich ist. Allgemein gilt dabei, daß die mit dem zu trennenden Medium durchströmte Querschnittsfläche kleiner als die kleinste Querschnittsfläche des Raumes an der jeweils ersten bzw. zweiten Seite zweier Membranen ist (Fallgestaltung bei Flachmembranen) bzw. kleiner als die kleinste Innenraumquerschnittsfläche der Hohlfadenmembranen des ersten und des zweiten Filterelements ist, die jeweils den Zwischenraum begrenzen. Unter diesen vorgenannten Bedingungen können die Medienströme des Verfahrens durch die erste Membran in den Raum bzw. durch die zweite Membran vom Raum zur ersten Seite bzw. vom Innenraum den Hohlfadenmembranen des ersten Filterelements in den Raum und aus diesem in den Innenraum der Hohlfadenmembranen des zweiten Filterelements vergrößert werden. Es findet somit durch die erfindungsgemäß vorgeschlagene Maßnahme eine Änderung der Strömungsverhältnisse und der damit verbundenen Druckverhältnisse statt, wobei eine Vergrößerung der Rückpermeation aus dem Raum durch die zweite Membran bzw. aus dem Raum durch die Hohlfadenmembranen des zweiten Filterelements in den Innenraum hinein stattfindet und dort wirksam wird. Damit verbunden ist die erwünschte Erhöhung der Effektivität des Verfahrens gemäß der obigen Aufgabe als Folge erhöhter innerer Zirkulation der Flüssigkeitsströme.

Grundsätzlich kann die Strömungsverengung auf beliebige geeignete Art und Weise ausgebildet sein. Es hat sich jedoch als vorteilhaft erwiesen, die Strömungsverengung in einem zwischen den ersten Seiten der Membran vorsehbaren Zwischenelement auszubilden, d. h. dieses als gesondertes Teil in dem Verfahren vorzusehen, so daß dieses auch ggf. in Abhängigkeit des mit dem Verfahren zu trennenden Mediums dem jeweiligen Medium bzw. der gewünschten Trennaufgabe durch schnellen Austausch angepaßt werden kann.

Versuche haben ergeben, daß die durch die Strömungsverengung für das zu trennende Medium definierte frei durchströmbare Querschnittsfläche vorteilhafterweise > 0,2 mm$^2$ ist, wobei diese Querschnittsfläche vorzugsweise im Bereich von 1 bis 50 mm$^2$ liegt.

Da normalerweise auch die Länge der Strömungsverengung in Fließrichtung einen Einfluß auf die Fließgeschwindigkeit des zu trennenden Mediums im Zwischenraum hat, beträgt die Länge der Strömungsverengung in Fließrichtung des zu trennenden Mediums vorzugsweise 0,1 bis 20 mm, wobei diese Länge insbesondere vorzugsweise 1 bis 5 mm groß ist.

Grundsätzlich kann die Strömungsverengung auf beliebige Weise konstruktiv gestaltet werden. Es hat sich jedoch im Zuge einer besseren Handhabbarkeit beim Betrieb des Verfahrens beispielsweise zur Erleichterung eines luftfreien Füllens einer Vorrichtung mit zu trennendem Medium zur Ausführung des Verfahrens herausgestellt, daß es vorteilhaft ist, die Strömungsverengung durch ein ringförmiges Drosselelement mit trapezförmigem Querschnitt mit rechteckigen Auflageflächen für Dichtelemente aus elastomeren Werkstoffen zur Abdichtung des Zwischenraumes auszubilden, wobei die schmale Trapezoberseite in den Strömungsweg des Mediums hineinragt.

Bei einer anderen vorteilhaften Ausgestaltung des Verfahrens ist die Strömungsverengung durch ein ringförmiges Drosselelement mit rechteckigem Querschnitt gebildet, wobei hierbei Dichtelemente aus elastomerem Werkstoff zur Abdichtung des Zwischenraumes bei einer derartigen Ausgestaltung ohne weitere konstruktive Maßnahmen auf der Strömungsverengung bzw. dem ringförmigen Drosselelement aufliegend vorgesehen werden können.

Die Erfindung wird nun unter Bezugnahme auf die nachfolgenden schematischen Zeichnungen anhand eines Ausführungsbeispieles mit als Hohlfadenmembranen ausgebildeten Membranen im einzelnen beschrieben. Darin zeigen:

Fig. 1     eine Vorrichtung, mit der das Verfahren ausgeführt werden kann, bestehend aus zwei seriell verbundenen, Hohlfadenmembranen aufweisenden Filterelementen, wobei der Raum (Filtratraum) des ersten und des zweiten Filterelements über eine gesonderte Leitung miteinander verbunden sind,

Fig. 2     in stark schematisierter Form in einem teilweisen Ausschnitt im Schnitt jeweils eine Hohlfadenmembran des ersten und des zweiten Filterelements in prinzipiell seriell aneinandergekoppelter Anordnung zur Erläuterung des Trennprinzips des Verfahrens,

Fig. 3     in stark schematisierter Form einen Schnitt durch ein die Strömungsverengung aufweisendes Zwischenelement und

Fig. 4     die Gesamtvorrichtung gemäß Fig. 1 mit Zwischenelement.

Eine Vorrichtung 10 zur Ausführung des Verfahrens besteht im wesentlichen aus einem ersten Filterelement 11, einem Zwischenelement 27 und einem zweiten Filterelement 12, die hintereinandergeschaltet sind, was noch im einzelnen weiter unten beschrieben wird. Prinzipiell können beide Filterelemente 11, 12 einen grundsätzlich gleichen Aufbau aufweisen, wobei aber unterschiedliche konstruktive Ausgestaltungen möglich sind. Beide Filterelemente 11, 12 umfassen als eigentliche Trennelemente Hohlfadenmembranen 15, 17, die auf an sich bekannte Weise an ihren jeweiligen Enden 110, 111 sowie 120, 121 in einem Gießharz oder dergleichen eingegossen und dadurch mechanisch miteinander und mit einer äußeren Begrenzung 113 bzw. 123 verbunden sind. Die Hohlfadenmembranen 15, 17 sind aber am äußeren Ende 110, 111 sowie 120, 121 offen, so daß deren Innenräume 16, 18 und der Zwischenraum 27 vom zu trennenden Medium 14 durchflossen werden können.

Obwohl in den Figuren im einzelnen nicht dargestellt, sind die Hohlfadenmembranen 15, 17 an ihrem einen Ende 110, 121 jeweils mit einem Einlaß 112 und einem Auslaß 122 versehen, und zwar derart, daß über den Einlaß 112 das zu trennende Medium 14 die Innenräume 16 der Hohlfadenmembranen durchströmen kann und dort am anderen Ende 111 austreten kann, in einen Zwischenraum 27 gelangen kann und von dort wiederum über das Ende 120 des zweiten Filterelements 12 in die Innenräume 18 der Hohlfadenmembranen 17 eintreten kann, die Hohlfadenmembranen 17 durchströmen kann und dann am Auslaß 122 des zweiten Filterelements 12 austreten kann.

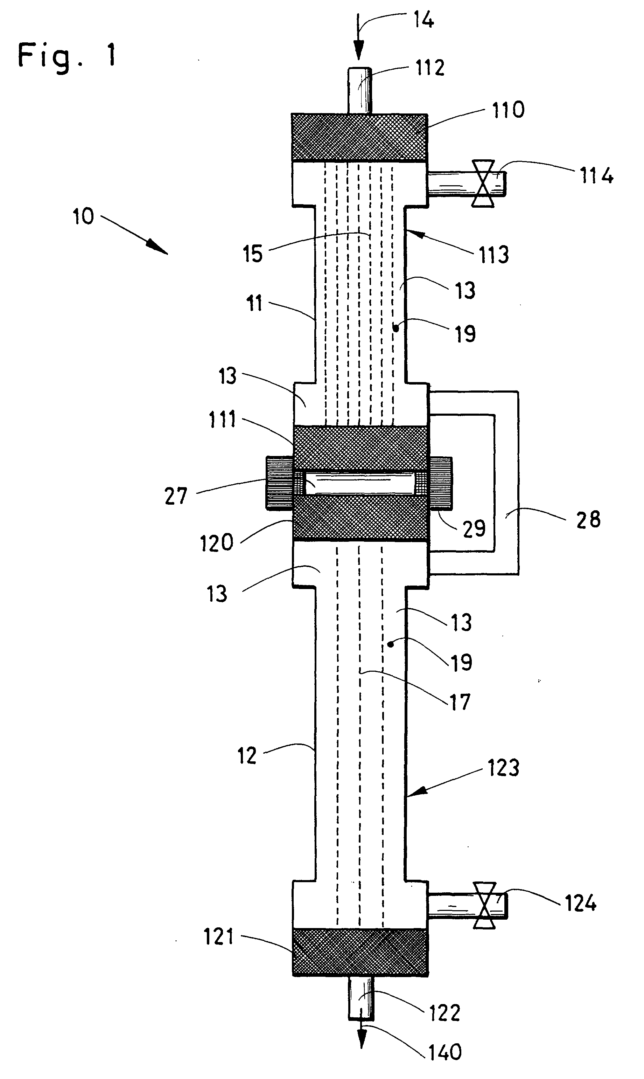

Die in Fig. 1 dargestellten Filterelemente 11, 12 sind schematisierte Darstellungen von Filterelementen, die zur Realisierung der Vorrichtung 10 aufgrund vorhandener Filterelemente benutzt wurden. Es sei darauf hingewiesen, daß die Filterelemente 11, 12 nicht zwingend den in Fig. 1 dargestellten schematischen Aufbau aufweisen müssen, um die Vorrichtung 10 zu realisieren. Bei der Realisierung der Vorrichtung mit den dargestellten Filterelementen 11, 12 wird der Raum 13, in dem beide Filterelemente 11, 12 angeordnet sind, durch die äußere Begrenzung 113 bzw. 123 nach außen druckdicht abgeschlossen. Um das Erfordernis zu erfüllen, daß beide Filterelemente 11, 12 in einem gemeinsamen Raum 13 angeordnet sind, ist der Raum 13 des ersten Filterelements 11 mit dem Raum 13 des zweiten Filterelements 12 über eine Leitung 28 auf geeignete Weise verbunden, so daß quasi ein gemeinsamer Raum 13 entsteht, in dem beide Filterelemente 11, 12 angeordnet sind.

Der Zwischenraum 27 ist nach außen druckdicht abgeschlossen, und zwar mittels geeigneter Dichtungs- bzw. Verbindungsmittel 29, und zwar in der Art, daß die Lumenquerschnittsflächen, d.h. die Stirnflächen der Hohlfadenmembranen 15, 17, mit ihren Öffnungen nicht beeinträchtigt werden, d.h. ein Durchströmen des zu trennenden Mediums 14 durch beide Hohlfadenmembranen 15, 17 ungehindert möglich ist.

Bei Inbetriebnahme der Vorrichtung 10 muß der Raum 13 in geeigneter, an sich bekannter Weise mit einem flüssigen Trägermedium gefüllt werden. Dieses kann beispielsweise über den verschließbaren Einfüllstutzen 114 des ersten Filterelements 11 geschehen. Das flüssige Trägermedium 19, das den Raum 13 füllt, ist bei üblichen Trenn- bzw. Fraktionier- und/oder Konzentrierungsprozessen das zu trennende Medium 14 selbst, das (auch) durch die Innenräume 16, 18 der Hohlfadenmembranen 15, 17 strömt, oder ein Bestandteil desselben. Bei medizinischen Anwendungen der Vorrichtung 10, beispielsweise auf dem Gebiet der Blutdetoxikation, verwendet man als flüssiges Trägermedium 19 bevorzugt eine physiologische Kochsalzlösung, Trägerflüssigkeiten ähnlicher Zusammensetzung bzw. Funktion oder Bestandteile des Blutes, z.B. Plasma.

Nachdem der Raum 13 mit dem flüssigen Trägermedium 19 gefüllt ist, wird das zu trennende Medium 14 über den Einlaß 112 im oben beschriebenen Sinne durch die beiden hintereinandergeschalteten Filterelemente 11, 12 über den Zwischenraum 27 geleitet. Durch geeignete Dimensionierung der Anzahl und Größe der Hohlfadenmembranen 15, 17 in beiden Filterelementen 11, 12 wird sichergestellt, daß die mittlere Strömungsgeschwindigkeit $v_1$ des zu trennenden Mediums 14 im Innenraum 16 der Hohlfadenmembranen 15 des ersten Filterelements 11 < der Strömungsgeschwindigkeit $v_2$ des zu trennenden Mediums 14 im Innenraum 18 der Hohlfadenmembran 17 des zweiten Filterelements 12 ist.

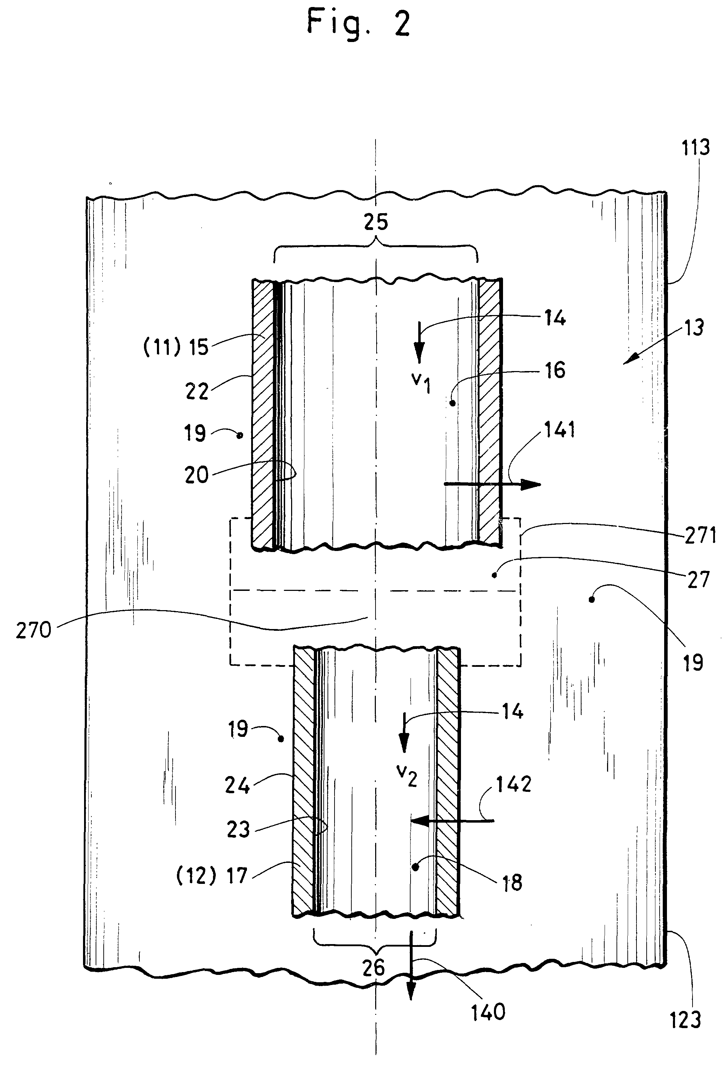

Bei Einhaltung dieser Relation tritt Permeat 141, vergleiche Fig. 2, durch die Membranwand der Hohlfadenmembranen 15 des ersten Filterelements aus und in den gemeinsamen Raum 13 ein. Dementsprechend tritt entsprechend der Trennwirkung der Hohlfadenmembranen 17 des zweiten Filterelements 12 Filtrat mit veränderter Zusammensetzung an Inhaltsstoffen vom gemeinsamen Raum 13 durch die Membranwand der Hohlfadenmembranen 17 des zweiten Filterelements 12 in die vom zu trennenden Medium 14 durchflossenen Innenräume 18 der Hohlfadenmembranen 17 des zweiten Filterelements 12 ein. Demzufolge reichern sich Inhaltsstoffe des zu trennenden bzw. zu fraktionierenden und/oder zu konzentrierenden flüssigen Mediums 14 im gemeinsamen Raum 13 an, wobei im gemeinsamen Raum 13 ein Konzentrat an abzutrennenden bzw. zu fraktionierenden und/oder zu konzentrierenden Inhaltsstoffen entsteht.

Bei der bestimmungsgemäßen Funktion der Vorrichtung 10 tritt aus dem ersten Filterelement 11 nur so viel Permeat 141 in den gemeinsamen Raum 13 ein, wie Filtrat 142 aus dem gemeinsamen Raum 13 über die Membranwand der Hohlfadenmembranen 17 des zweiten Filterelements 12 in den durchströmten Innenraum 18 der Hohlfadenmembranen 17 zurückpermeieren kann. Vermindert sich aufgrund der Druckverhältnisse zwischen dem die Hohlfadenmembranen 15 des ersten Filterelements durchströmenden Medium 14 und dem gemeinsamen Raum 13 der Permeatfluß des ersten Filterelements 11, so erhöht sich, bedingt durch den erfindungsgemäßen Aufbau der Vorrichtung 10, insbesondere die Strömungsgeschwindigkeit des den Innenraum 18 der Hohlfadenmembranen 17 des zweiten Filterelements 12 durchströmenden Mediums 14, was zu einer vergrößerten Druckdifferenz zwischen dem gemeinsamen Raum und dem Innenraum 18 der Hohlfadenmembranen 17 des zweiten Filterelements 12 führt, dessen Folge eine erhöhte Permeation von Filtrat 142 aus dem gemeinsamen Raum 13 in den durchströmten Innenraum der Hohlfadenmembranen 17 des zweiten Filterelements 12 ist, was wiederum zu einem erhöhten Permeatfluß von durchströmtem Innenraum 16 der Hohlfadenmembranen 15 des ersten Filterelements 11 in den gemeinsamen Raum 13 führt. Die Vorrichtung 10 ist somit der Zielsetzung entsprechend ohne äußere Regelelemente selbstregelnd.

Wie erwähnt, muß sichergestellt sein, daß die mittlere Strömungsgeschwindigkeit $v_1$ des zu trennenden Mediums 14 im Innenraum 16 der Hohlfadenmembranen 15 des ersten Filterelements 11 < der Strömungsgeschwindigkeit $v_2$ des zu trennenden Mediums 14 im Innenraum 18 der Hohlfadenmembranen 17 des zweiten Filterelementes 12 ist. Unter Vernachlässigung der Anteile von Druckverlusten und eines Volumenverlustes/-zuwachses in den Filterelementen 11, 12 ist diese Forderung verwirklicht, wenn die Bedingung der Gleichung

$$\frac{1}{n_1 * d_1{}^2} < \frac{1}{n_2 * d_2{}^2}$$

mit

$n_1 =$     Hohlfadenmembranzahl im ersten Filterelement

$n_2 =$     Hohlfadenmembranzahl im zweiten Filterelement

$d_1 =$     Innendurchmesser der Hohlfadenmembranen des ersten Filterelementes

$d_2 =$     Innendurchmesser der Hohlfadenmembranen des zweiten Filterelementes

eingehalten werden. Mit der Zahl und dem Innendurchmesser 25, 26 der Hohlfadenmembranen 15, 17 in den Filterelementen 11, 12 sind Kenngrößen gegeben, mittels derer das Verhältnis der Strömungsgeschwindigkeiten in den Innenräumen 16, 18 der Hohlfadenmembranen 15, 17 der Vorrichtung 10 unter ansonsten identischen Bedingungen im starken Maße variiert und somit die Forderung der lösungsgemäßen Relation realisiert werden kann.

Normalerweise ist der Raum während des Trenn- bzw. Fraktionier- und/oder Konzentrationsprozesses geschlossen. Nach Erreichen des gewünschten Aufkonzentrierungsgrades kann der Raum 13 zeitweise oder kontinuierlich so geöffnet werden, daß auch in diesem Zustand die Bedingung, daß die Strömungsgeschwindigkeit $v_1$ des zu trennenden Mediums 14 im Innenraum 16 der Hohlfadenmembranen 15 des ersten Filterelements < der Strömungsgeschwindigkeit $v_2$ des zu trennenden Innenmediums im Innenraum der Hohlfadenmembranen des zweiten Filterelements 12 ist, realisiert bleibt. Die Entnahme von Konzentrat aus dem Raum 13 hat daher so zu erfolgen, daß die Relation

$$\frac{\dot{V} - \dot{V}k}{n_1 * d_1{}^2} < \frac{\dot{V}}{n_2 * d_2{}^2}$$

mit

$\dot{V} =$       mittlerer Volumenstrom der das Innenkompartmente durchströmenden Flüssigkeit

$\dot{V}_k =$      mittlerer Volumenstrom des Konzentrats

$n_1, d_1, n_2, d_2$ -    wie oben beschrieben

erfüllt wird. Bei kontinuierlicher Entnahme erfolgt dieses vorzugsweise durch Öffnen des Auslaßstutzens 124 des zweiten Filterelements 12 unter Verschluß des Einfüllstutzens 114 des ersten Filterelements 11.

Deshalb ist es erfindungsgemäß auch möglich, daß der Raum 13 während des Trennvorganges für eine diskontinuierliche oder kontinuierliche Konzentratabführung so geöffnet ist, daß auch in diesem Zustand die Bedingung realisiert bleibt, daß die Strömungsgeschwindigkeit $v_1$ des zu trennenden Mediums 14 im Innenraum 16 der Hohlmembranen 15 des ersten Filterelementes 11 < der Strömungsgeschwindigkeit $v_2$ des zu trennenden Innenmediums 14 im Innenraum 18 der Hohlfadenmembranen 17 des zweiten Filterelementes 12 ist.

Schließlich ist es grundsätzlich auch möglich, den gemeinsamen Raum 13 speziell bei der Trennung komplexer Inhaltsstoffe im zu trennenden Medium 14 neben dem flüssigen Trägermedium 19 zusätzlich teilweise oder vollständig mit einem Sorbens für die zu trennenden bzw. zu fraktionierenden und/oder zu konzentrierenden Inhaltsstoffe zu füllen, um in an sich bekannter Weise den Trennvorgang zu unterstützen.

Der vorangehend beschriebene Grundaufbau einschließlich der Darstellung der Funktion der Vorrichtung 10 ist zunächst zum besseren Verständnis des Aufbaus und der Funktion der Vorrichtung 10 beschrieben worden mit einem Zwischenraum 27 zwischen dem ersten Filterelement 11 und dem zweiten Filterelement 12, der dem den Zwischenraum 27 durchquerenden Strömungsmedium 14 keinen Widerstand entgegensetzt. Tatsächlich ist jedoch der Zwischenraum 27 so gestaltet, daß er eine Strömungsverengung 270 für das zu trennende Medium 14 aufweist, vergleiche die Fig. 2, 3 und 4.

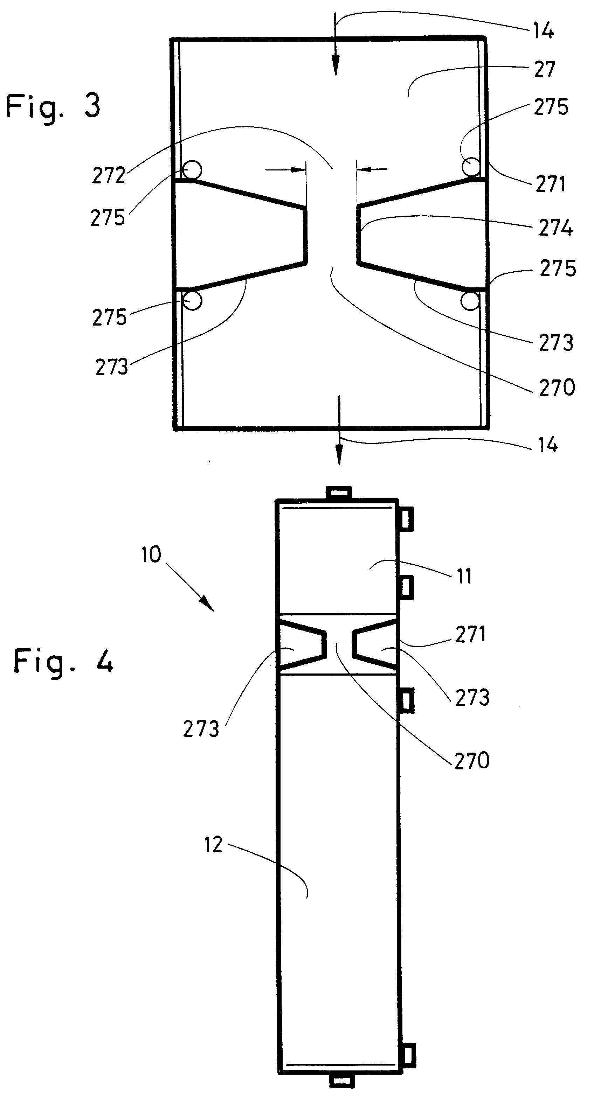

Die Strömungsverengung 270 ist hier in Form eines gesonderten Zwischenelementes 271, vergleiche Fig. 3, ausgebildet, wobei das erste Filterelement 11 und das zweite Filterelement 12 beispielsweise mit dem Zwischenelement 271 dichtend verschraubt oder auf sonstige geeignete Weise dichtend verbunden werden können, ggf. auch mittels Schweißung, Klebung und dergleichen. Es können auch umlaufende Dichtungsringe 275 vorgesehen werden, die sich beispielsweise auf einem ringförmigen Drosselelement 273, das im Zwischenelement 271 ausgebildet ist und die eigentliche Strömungsverengung 270 bildet, abstützen. Das eigentliche Drosselelement 273 kann beispielsweise ringförmig im Zwischenelement 271 ausgebildet sein und es kann dabei beispielsweise einen trapezförmigen oder einen rechteckförmigen Querschnitt aufweisen. Bei der Ausbildung des ringförmigen Drosselelements 273 in Form eines trapezförmigen Querschnittes ist die schmale Trapezoberseite 274 derart ausgerichtet, daß sie in den Strömungsweg des Mediums 14 hineinragt.

Von entscheidender Bedeutung für die Effektivitätserhöhung der Vorrichtung 10 gegenüber der Vorrichtung 10 gemäß dem oben beschrieben Grundaufbau ist die Dimensionierung der Strömungsverengung 270. Die Strömungsverengung 270, die die frei durchströmbare Querschnittsfläche 272 definiert, ist > 0,2 mm$^2$ und liegt zweckmäßigerweise im Bereich von 1 bis 50 mm$^2$, je nach Art des zu trennenden Mediums 14 bzw. der jeweils gewünschten Effektivitätssteigerung der Vorrichtung 10 gegenüber der Vorrichtung 10 mit dem oben beschriebenen Grundaufbau. Auch die Länge der Strömungsverengung in Fließrichtung des zu trennenden Mediums bestimmt die Effektivität der Vorrichtung. So ist beispielsweise die Länge der Strömungsverengung 270 zwischen 0,1 bis 20 mm ausgebildet und ist dabei zweckmäßigerweise zwischen 1 bis 5 mm groß. Allgemein gilt, daß die Strömungsverengung 270 so ausgebildet ist, daß die frei durchströmbare Querschnittsfläche 272 der Strömungsverengung 270 kleiner als die kleinste Strömungsaustrittsfläche der ersten Seite der ersten Membran 15 und kleiner als die kleinste Eintrittsfläche für das zu trennende Medium 14 an der ersten Seite der zweiten Membran ist bzw. bei der Ausbildung der beiden Membranen 15, 17 in Form von Hohlfadenmembranen kleiner als die kleinste Lumenquerschnittsfläche der beiden Filterelemente 11, 12 an entsprechender Stelle ist, jedoch > 0,2 mm$^2$, was die mit der Vorrichtung 10 angestrebte Veränderung der Strömungsführung aller Medienströme 10 in der Vorrichtung bewirkt. Dabei wird die Lumenquerschnittsfläche bei Hohlfadenmembranen definitionsgemäß durch die Menge aller Öffnungsflächen der Hohlfadenmembranen gebildet.

Bezugszeichenliste

| | |
|---|---|
| 10 | Vorrichtung |
| 11 | Filterelement (erstes) |
| 110 | Ende |
| 111 | Ende |
| 112 | Einlaß |
| 113 | Begrenzungswand |
| 114 | Einfüllstutzen |
| 12 | Filterelement (zweites) |
| 120 | Ende |
| 121 | Ende |
| 122 | Auslaß |

| | |
|---|---|
| 123 | Begrenzungswand |
| 124 | Auslaßstutzen |
| 13 | Raum |
| 14 | zu trennendes Medium |
| 141 | Permeat |
| 142 | Filtrat |
| 15 | Hohlfadenmembran (erstes Filterelement) |
| 16 | Innenraum (Hohlfadenmembran erstes Filterelement) |
| 17 | Hohlfadenmembran (zweites Filterelement) |
| 18 | Innenraum (Hohlfadenmembran zweites Filterelement) |
| 19 | flüssiges Trägermedium |
| 20 | innere Oberfläche (Hohlfadenmembran erstes Filterelement) |
| 22 | äußere Oberfläche (Hohlfadenmembran erstes Filterelement) |
| 23 | innere Oberfläche (Hohlfadenmembran zweites Filterelement) |
| 24 | äußere Oberfläche (Hohlfadenmembran zweites Filterelement) |
| 25 | Innendurchmesser (Hohlfadenmembran erstes Filterelement |
| 26 | Innendurchmesser (Hohlfadenmembran zweites Filterelement) |
| 27 | Zwischenraum |
| 270 | Strömungsverengung |
| 271 | Zwischenelement |
| 272 | Querschnittsfläche |
| 273 | Drosselelement |
| 274 | Trapezoberseite |
| 275 | Dichtungsring |
| 28 | Leitung |
| 29 | Dichtungs-/Verbindungsmittel |

## Patentansprüche

1. Verfahren zur Trennung flüssiger Medien, wobei das zu trennende Medium (14) nacheinander an die jeweils erste Seite zweier Membranen (15, 17) über einen zwischen den Membranen (15, 17) vorgesehenen Zwischenraum (27) geleitet wird, und wobei die zweiten Seiten der beiden Membranen (15, 17) einen gemeinsamen, mit flüssigem Trägermedium (19) gefüllten Raum (13) begrenzen, daß der gemeinsame Raum (13) während des Trennvorganges verschließbar ist und daß die Strömungskanäle an den jeweils ersten Seiten der Membranen (15, 17) so bemessen werden, daß die mittlere Strömungsgeschwindigkeit $v_1$ des zu trennenden Mediums (14) an der ersten Seite der ersten Membran (15) < der Strömungsgeschwindigkeit $v_2$ des zu trennenden Mediums (14) an der ersten Seite der zweiten Membran (17) ist, wobei die Membranen (15, 17) so ausgewählt werden, daß die Inhaltsstoffe des zu trennenen Mediums (14) sich im gemeinsamen äußeren Raum (13) anreichern, **dadurch gekennzeichnet, daß** der Zwischenraum (27) eine Strömungsverengung (270) für das zu trennende Medium (14) aufweist.

2. Verfahren nach Anspruch 1, **dadurch gekennzeichnet, daß** die Strömungsverengung (270) in einem zwischen den ersten Seiten der Membranen (15, 17) vorsehbaren Zwischenelement (271) ausgebildet ist.

3. Verfahren nach einem oder beiden der Ansprüche 1 oder 2, **dadurch gekennzeichnet, daß** die durch die Strömungsverengung (270) für das zu trennende Medium (14) definierte frei durchströmbare Querschnittsoberfläche (272) > 0,2 mm$^2$ ist.

4. Verfahren nach Anspruch 3, **dadurch gekennzeichnet, daß** die Querschnittfläche (272) im Bereich von 1 bis 50 mm$^2$ liegt.

5. Verfahren nach einem oder mehreren der Ansprüche 1 bis 4, **dadurch gekennzeichnet, daß** die Länge der Strömungsverengung (270) in Fließrichtung des zu trennenden Mediums (14) im Bereich von 0,1 bis 20 mm liegt.

6. Verfahren nach Anspruch 5, **dadurch gekennzeichnet, daß** der Bereich 1 bis 5 mm groß ist.

7. Verfahren nach einem oder mehreren der Ansprüche 1 bis 6, **dadurch gekennzeichnet, daß** die Strömungsverengung (270) durch ein ringförmiges Drosselelement (273) mit trapezförmigem Querschnitt gebildet wird, wobei die schmale Trapezoberseite (274) in den Strömungsweg des Mediums (14) hineinragt.

8. Verfahren nach einem oder mehreren der Ansprüche 1 bis 6, **dadurch gekennzeichnet, daß** die Strömungsverengung (270) durch ein ringförmiges Drosselelement (273) mit rechteckigem Querschnitt gebildet wird.

**Claims**

1. Method of separating liquid media, whereby the medium to be separated (14) is directed successively along the respective first side of two membranes (15, 17) through an intermediate space (27) disposed between the membranes (15, 17), the second sides of the two membranes (15, 17) bounding a common chamber (13) filled with liquid carrier medium (19), it being possible to close off the common chamber (13) during the separation process, and the flow passages alongside the respective first sides of the membranes (15, 17) are dimensioned so that the mean flow velocity $v_1$ of the medium (14) to be separated at the first side of the first membrane (15) < the flow velocity $v_2$ of the medium (14) to be separated at the first face of the second membrane (17), and the membranes (15, 17) are selected so that the contents of the medium (14) to be separated accumulate in the common outer chamber (13), **characterised in that** the intermediate space (27) has a flow constriction (270) for the medium (14) to be separated.

2. Method as claimed in claim 1, **characterised in that** the flow constriction (270) may be disposed in an intermediate element (271) disposed between the first sides of the membranes (15, 17).

3. Method as claimed in one or both of claims 1 or 2, **characterised in that** the cross-sectional surface area (272) defined by the flow constriction (270) through which the medium (14) to be separated can flow freely is > 0.2 mm$^2$.

4. Method as claimed in claim 3, **characterised in that** the cross-sectional surface area (272) is in the range of from 1 to 50 mm$^2$.

5. Method as claimed in one or more of claims 1 to 4, **characterised in that** the length of the flow constriction (270) in the flow direction of the medium (14) to be separated is in the range of from 0.1 to 20 mm.

6. Method as claimed in claim 5, **characterised in that** the range is 1 to 4 mm in size.

7. Method as claimed in one or more of claims 1 to 6, **characterised in that** the flow constriction (270) is provided in the form of an annular throttle element (273) with a cross section of trapezoidal shape, the narrow top side of the trapezoid (274) projecting into the flow path of the medium (14).

8. Method as claimed in one or more of claims 1 to 6, **characterised in that** the flow constriction (270) is provided in the form of an annular throttle element (273) with a rectangular cross section.

**Revendications**

1. Procédé pour la séparation de milieux liquides, dans lequel le milieu à séparer (14) est conduit successivement sur les premières faces de deux membranes (15, 17) par l'intermédiaire d'un espace (27) prévu entre les membranes (15, 17) et dans lequel les deuxièmes faces des deux membranes (15, 17) délimitent un espace commun (13), rempli d'un milieu porteur liquide (19), l'espace commun (13) pouvant être fermé pendant le processus de séparation et les canaux d'écoulement sur les premières faces des membranes (15, 17) étant dimensionnés de manière à ce que la vitesse moyenne d'écoulement $v_1$ du milieu à séparer (14) au niveau de la première face de la première membrane (15) soit inférieure à la vitesse d'écoulement $v_2$ du milieu à séparer (14) au niveau de la première face de la deuxième membrane (17), les membranes (15, 17) étant choisies de manière à ce que les composants du milieu à séparer (14) s'accumulent dans l'espace commun externe (13), **caractérisé en ce que** l'espace (27) présente un étranglement d'écoulement (270) pour le milieu à séparer (14).

2. Procédé selon la revendication 1, **caractérisé en ce que** l'étranglement d'écoulement (270) est formé dans un élément intermédiaire (271) pouvant être prévu entre les premières faces des membranes (15, 17).

3. Procédé selon l'une des revendications 1 ou 2 ou les deux, **caractérisé en ce que** la surface de la section transversale (272), définie par l'étranglement d'écoulement (270) pour le milieu à séparer (14) et pouvant être traversée librement, est supérieure à 0,2 mm$^2$.

4. Procédé selon la revendication 3, **caractérisé en ce que** la surface de la section transversale (272) se situe dans la gamme allant de 1 mm$^2$ à 50 mm$^2$.

5. Procédé selon l'une ou plusieurs des revendications 1 à 4, **caractérisé en ce que** la longueur du rétrécissement (270) dans le sens de l'écoulement du milieu à séparer (14) va de 0,1 mm à 20 mm.

6. Procédé selon la revendication 5, **caractérisé en ce que** la gamme de longueur va de 1 mm à 5 mm.

7. Procédé selon l'une ou plusieurs des revendications 1 à 6, **caractérisé en ce que** l'étranglement d'écoulement (270) est formé par un élément d'étranglement (273) présentant une coupe transversale trapézoïdale, la face étroite supérieure du trapèze (274) s'avançant dans la voie d'écoulement du milieu (14).

8. Procédé selon l'une ou plusieurs des revendications 1 à 6, **caractérisé en ce que** l'étranglement d'écoulement (270) est formé par un élément d'étranglement (273) annulaire présentant une coupe transversale rectangulaire.

Fig. 1

# Fig. 2

Fig. 3

14
27
275
272
275
271
275
274
275
273
270
275
273
14

Fig. 4

10
11
271
273
270
273
12